# EUROPÄISCHE PATENTANMELDUNG

(11) **EP 1 792 774 A2**
(43) Veröffentlichungstag der Anmeldung: **06.06.2007**
(21) Anmeldenummer: 06024165.0
(22) Anmeldetag: 22.11.2006
(51) Int. Cl.: B60P 7/08, B60R 7/02, B60R 13/01

(54) **Einrichtung zum Sichern von Ladegut**

(30) Priorität: 02.12.2005 DE 202005018969 U
(71) Anmelder: Quintana, Alexander, 47441 Moers (DE)
(72) Erfinder: Quintana, Alexander, 47441 Moers (DE)
(74) Vertreter: Schoenen, Norbert

(57) **Zusammenfassung**

Die Einrichtung dient zum Sichern von Ladegut im Lade- oder Kofferraum eines Fahrzeuges, insbesondere Kraftfahrzeugs, und umfasst eine Matte (1), wobei die Matte (1) mindestens eine Öffnung (3) aufweist und mindestens ein Abstützelement (4a; 4b), das durch die Öffnung (3) hindurchsteckbar ist, wobei das Abstützelement (4a; 4b) ein ebenes flächenförmiges Bodenteil (5) und ein nach oben ragendes Stützteil (6) aufweist. Die Öffnungen (3) sind als lang gestreckte Schlitze ausgebildet, deren Länge mindestens so groß wie die Breite des Bodenteils (5) ist. Im Gebrauch ist das Bodenteil (5) unterhalb der Unterseite der Matte (1) und das Stützteil (6) oberhalb der Matte (1) angeordnet. Die Einrichtung hält das Ladegut auch bei höheren Kurvengeschwindigkeiten und bei höheren Längsbeschleunigungen und starken Bremsmanövern an dem ihm zugewiesenen Platz. Sie ist einfach zu handhaben, preiswert herstellbar und vielseitig für beliebige Abmessungen des Ladeguts zu verwenden.

Als Zeichnung für die Zusammenfassung wird Figur 3 vorgeschlagen.

## Beschreibung

Die Erfindung betrifft eine Einrichtung zum Sichern von Ladegut im Lade- oder Kofferraum eines Fahrzeuges, insbesondere Kraftfahrzeuges, mit einer Matte, wobei die Matte mindestens eine Öffnung aufweist, und mit mindestens einem Abstützelement, das durch die Öffnung hindurchsteckbar ist, wobei das Abstützelement ein ebenes flächenförmiges Bodenteil und ein nach oben ragendes Stützteil aufweist.

Bekannt sind solche so genannten Kofferraummatten für Personenkraftfahrzeuge zur Sicherung des Ladegutes, zum Beispiel aus der DE 38 39 260 A1. Die im Handel erhältlichen Kofferraummatten üblicher Bauart weisen eine mehr oder weniger rutschfeste Oberfläche auf. Da die Matten jedoch keine seitliche Absicherung besitzen, sind sie nur bei mäßigen Längs- und Querbeschleunigungen von Nutzen. Bei höheren Kurvengeschwindigkeiten, also höheren Querbeschleunigungen, oder auch bei größeren Längsbeschleunigungen, zum Beispiel bei Abbremsmanövern, rutscht das Ladegut trotz der Kofferraummatte und kann sogar umkippen.

Eine Einrichtung zum Sichern von Ladegut der eingangs genannten Art ist aus der deutschen Offenlegungsschrift DE 24 43 882 A1 bekannt. Obwohl auch hier Öffnungen, nämlich Aussparungen, in der Matte vorgeschlagen werden, zeigt das dort beschriebene Ausführungsbeispiel nach oben gerichtete Vorsprünge, in welche ein Bodenteil eines Abstützelementes mit entsprechenden Öffnungen im Bodenteil aufsteckbar ist. Das Bodenteil liegt also oberhalb der Matte und muss durch die nach oben gerichteten Vorsprünge in seiner Lage gehalten werden. Die Notwendigkeit, bei der rutschfesten Matte nach oben gerichtete Vorsprünge vorzusehen, erschwert die Herstellung und führt damit zu höheren Herstellungskosten, als wenn nur einfache Öffnungen in der Matte erforderlich wären.

Der Erfindung liegt daher die Aufgabe zugrunde, eine Einrichtung der eingangs genannten Art zu entwickeln, die das Ladegut auch bei höheren Kurvengeschwindigkeiten und bei höheren Längsbeschleunigungen und starken Bremsmanövern an dem ihm zugewiesenen Platz hält. Die Einrichtung soll möglichst einfach zu handhaben und preiswert herstellbar sein. Sie soll vielseitig für beliebige Abmessungen des Ladeguts zu verwenden sein.

Diese Aufgabe wird bei der Einrichtung der eingangs genannten Art erfindungsgemäß dadurch gelöst, dass die Öffnungen als lang gestreckte Schlitze ausgebildet sind, deren Länge mindestens so groß wie die Breite des Bodenteils ist und dass im Gebrauch das Bodenteil unterhalb der Unterseite der Matte und daran anliegend und das Stützteil oberhalb der Matte angeordnet ist.

Mit der Erfindung wird erreicht, dass das Ladegut sicher und rutschfest im Kofferraum transportiert werden kann. Das Gewicht des auf der Matte aufliegenden Ladegutes fixiert das unterhalb der Matte angeordnete Bodenteil, so dass eine seitliche Abstützung durch das mit dem Bodenteil verbundene Stützteil erfolgt. Noppen und Vorsprünge oder andere komplizierte Formgestaltungen sind weder bei der Matte noch beim Abstützelement erforderlich. Dennoch ist eine sichere Fixierung des Ladeguts gewährleistet.

Vorzugsweise ist die Breite des Bodenteils bzw. des Stützteils so groß wie die Länge der Schlitze, damit die Abstützelemente noch besser relativ zur Matte fixiert sind und sich nicht innerhalb des Schlitzes hin- und herbewegen oder verschieben können.

Weitere vorteilhafte Ausgestaltungen sind in den Unteransprüchen aufgeführt. Wenn die Öffnungen in der Matte die Querschnittsform der Stützteile haben, wird das Abstützelement durch die festliegende Matte zusätzlich fixiert.

Erfindungsgemäß ist es einerseits möglich, dass die Schlitze in der Matte der Breite des Bodenteils angepasst sind, wie es bereits erläutert worden ist. In diesem Fall können die Abstützelemente von oben durch die Schlitze hindurchgesteckt werden.

Ebenso ist es aber auch möglich und vorteilhaft, wenn die Länge der Schlitze an die Breite der flachen Stützteile angepasst sind, so dass das Abstützelement von unten durch die Matte hindurchgesteckt werden kann. In diesem Fall erhält man den zusätzlichen Vorteil, dass das Bodenteil eine beliebige, insbesondere eine sehr große Fläche haben kann und dann durch das Gewicht des aufliegenden Ladeguts in Verbindung mit der rutschfesten Matte besonders gut fixiert ist und das Ladegut sehr sicher in der gewünschten Position hält. Es ist sogar möglich, dass das Abstützelement ein Bodenteil aufweist, dessen Fläche ein Viertel bis die Hälfte der Mattenfläche beträgt.

Schließlich ist es auch möglich, dass die Länge der Schlitze sowohl an die Breite des Bodenteils als auch an die Breite des flachen Stützteils angepasst ist, so dass das Abstützelement sowohl von oben als auch von unten durch die Matte hindurchsteckbar ist.

Ein Ausführungsbeispiel der Erfindung wird nachfolgend anhand von Zeichnungen näher erläutert. Es zeigen
- Figur 1: eine Ansicht einer erfindungsgemäßen Matte von oben ohne Abstützelemente,
- Figur 2a: eine Seitenansicht eines Abstützelementes in Form eines T-Stücks,
- Figur 2b: eine Seitenansicht eines Abstützelementes in Form eines Winkelstücks,
- Figur 3: eine Seitenansicht der erfindungsgemäßen Matte mit Ladegut und erfindungsgemäßen Abstützelementen, in diesem Fall T-Stücken, und
- Figur 4: die Anordnung nach Figur 3 in einer Ansicht von oben.

In allen Zeichnungen haben gleiche Bezugszeichen die gleiche Bedeutung und werden daher gegebenenfalls nur einmal erläutert.

Die erfindungsgemäße Matte 1 besitzt viele schlitzförmige durchgehende Öffnungen 3 (Löcher), durch die von unten ein Abstützelement, nämlich wahlweise ein T-Stück 4a oder ein Winkelstück 4b geschoben wird. Das Ladegut 2 wird durch diese seitlichen Abstützungen am gewünschten Platz gehalten.

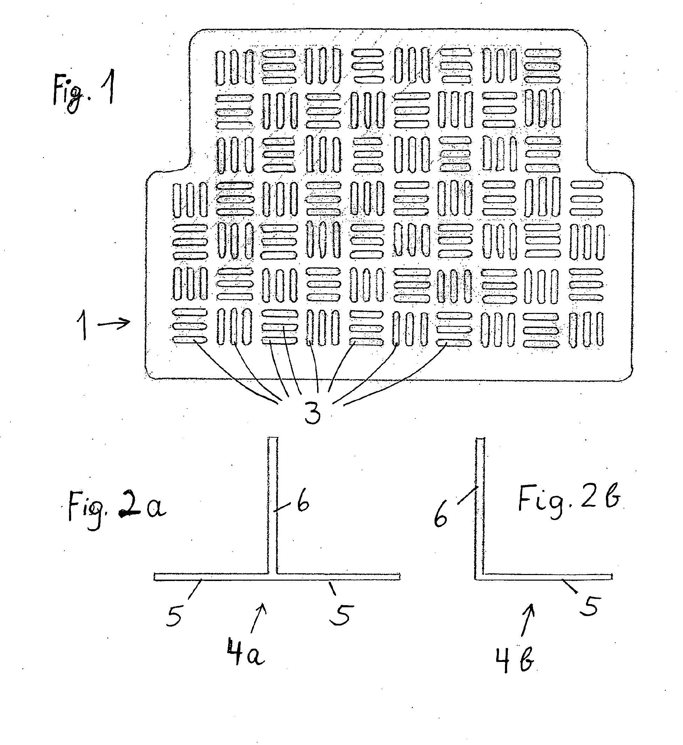

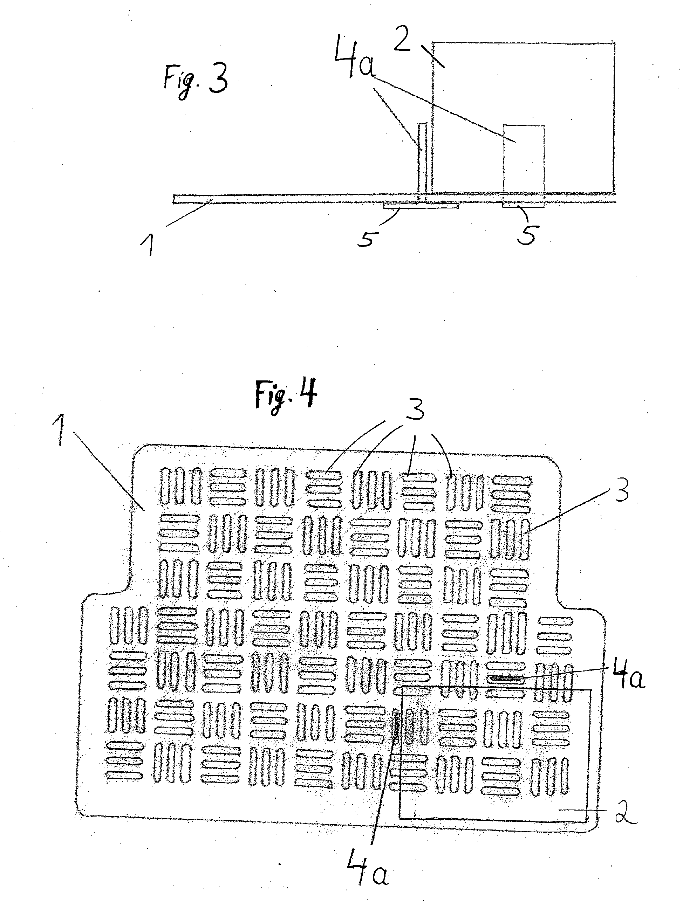

Bei der Beladung werden also die Abstützelemente, zum Beispiel T-Stücke 4a von unten durch die Öffnungen 3 geschoben. Dies wird durch Anheben der Matte 1 erreicht. Nach dem Aufsetzen des Ladeguts 2 ergibt sich dann die Anordnung entsprechend Figur 4. Dabei ist die Matte 1 der Grundfläche des Kofferraums derart angepasst, dass die Ränder der Matte 1 unmittelbar an den senkrecht aufragenden Wänden des Kofferraums anliegen. Das Ladegut 2 wird also in Figur 1 links und oben durch die T-Stücke 4a und rechts und unten durch die Wände des Kofferraums in seiner Lage fest und unverrückbar gehalten.

Änderungen der Positionierung der Abstützelemente 4a oder 4b sind auf einfache Weise vorzunehmen, so dass praktisch eine beliebige Anordnung der Abstützelemente möglich ist. Vorzugsweise ist die Unterseite der Matte 1 rutschfest.

Von Vorteil ist es auch, wenn die Oberseite der Matte rutschfest ist. In den Zeichnungen ist außerdem das flache Bodenteil 5 und das nach oben ragende Stützteil 6 der Abstützelemente 4a und 4b deutlich zu erkennen (Figuren 2a und 2b).

Die Erfindung ist durch die spezielle Form der Abstützelemente und der Öffnungen 3 nicht eingeschränkt. Möglich sind im Rahmen der Erfindung auch anders geformte Abstützelemente und Öffnungen.

Grundsätzlich ist die Erfindung nicht nur für Personenkraftwagen, sondern auch für Lastkraftwagen oder andere Fahrzeuge geeignet.

## Patentansprüche

1. Einrichtung zum Sichern von Ladegut im Lade- oder Kofferraum eines Fahrzeuges, insbesondere Kraftfahrzeugs, mit einer Matte (1), wobei die Matte (1) mindestens eine Öffnung (3) aufweist, und mit mindestens einem Abstützelement (4a; 4b), das durch die Öffnung (3) hindurchsteckbar ist, wobei das Abstützelement (4a; 4b) ein ebenes flächenförmiges Bodenteil (5) und ein nach oben ragendes Stützteil (6) aufweist,
**dadurch gekennzeichnet,**
**dass** die Öffnungen (3) als lang gestreckte Schlitze ausgebildet sind, deren Länge mindestens so groß wie die Breite des Bodenteils (5) ist und dass im Gebrauch das Bodenteil (5) unterhalb der Unterseite der Matte (1) und daran anliegend und das Stützteil (6) oberhalb der Matte (1) angeordnet ist.

2. Einrichtung nach Anspruch 1,
**dadurch gekennzeichnet,**
**dass** die Öffnungen (3) in der Matte (1) die Querschnittsform der Bodenteile (5) haben.

3. Einrichtung zum Sichern von Ladegut im Lade- oder Kofferraum eines Fahrzeuges, insbesondere Kraftfahrzeugs, mit einer Matte (1), wobei die Matte (1) mindestens eine Öffnung (3) aufweist, und mit mindestens einem Abstützelement (4a; 4b), das durch die Öffnung (3) hindurchsteckbar ist, wobei das Abstützelement (4a; 4b) ein ebenes flächenförmiges Bodenteil (5) und ein nach oben ragendes Stützteil (6) aufweist,
**dadurch gekennzeichnet,**
**dass** die Öffnungen (3) als lang gestreckte Schlitze ausgebildet sind, deren Länge mindestens so groß wie die Breite des flachen Stützteils (6) ist und dass im Gebrauch das Bodenteil (5) unterhalb der Unterseite der Matte (1) und daran anliegend und das Stützteil (6) oberhalb der Matte (1) angeordnet ist.

4. Einrichtung nach Anspruch 3,
**dadurch gekennzeichnet,**
**dass** die Öffnungen (3) in der Matte (1) die Querschnittsform der Stützteile (6) haben.

5. Einrichtung nach einem der vorhergehenden Ansprüche,
**dadurch gekennzeichnet,**
**dass** das Abstützelement als T-Stück (4a) oder als Winkelstück (4b) ausgebildet ist.

6. Einrichtung nach einem der vorhergehenden Ansprüche,
**dadurch gekennzeichnet,**
**dass** die Matte (1) eine rutschfeste Unterseite hat.

7. Einrichtung nach einem der vorhergehenden Ansprüche,
**dadurch gekennzeichnet,**
**dass** die Schlitze (3) geradlinig sind.
